(19) Europäisches Patentamt
European Patent Office
Office européen des brevets

(11) EP 0 634 633 B1

(12) **FASCICULE DE BREVET EUROPEEN**

(45) Date de publication et mention de la délivrance du brevet:
**25.03.1998 Bulletin 1998/13**

(51) Int Cl.$^6$: **G01F 1/86**, G01F 1/36, F17C 13/02

(21) Numéro de dépôt: **94201868.0**

(22) Date de dépôt: **29.06.1994**

(54) **Système de comptage de gaz fourni sous haute pression**

Messvorrichtung für Hochdruckgas

Metering system for gas provided under high pressure

(84) Etats contractants désignés:
**BE DE ES FR GB IT NL**

(30) Priorité: **09.07.1993 FR 9308591**

(43) Date de publication de la demande:
**18.01.1995 Bulletin 1995/03**

(73) Titulaire: **SCHLUMBERGER INDUSTRIES**
**F-92542 Montrouge Cédex (FR)**

(72) Inventeurs:
- **Campain, Jean-pierre**
  **F-92140 Clamart (FR)**
- **Fournier, Jacques**
  **F-91220 Bretigny S/Orge (FR)**
- **Janssen, Sylvain**
  **F-92200 Neuilly S/Seine (FR)**

(56) Documents cités:
**EP-A- 0 042 432**
**FR-A- 2 400 188**
**US-A- 3 750 472**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 634 633 B1

## Description

La présente invention concerne un système de mesure d'une quantité de gaz comprimé fourni sous une haute pression d'un premier réservoir vers un deuxième réservoir.

On connait de tels systèmes sous plusieurs formes et incorporés dans de nombreuses applications techniques. Concernant quelques unes de ces applications il existe le problème où une facturation de la quantité de gaz fourni ne nécessite qu'une évaluation de cette quantité de gaz sous condition de fourniture (température et pression) mais également l'expression de cette quantité en termes standard en ce qui concerne la pression et la température.

C'est ainsi qu'on trouve des compteurs classiques de gaz du type P.T.Z. qui sont munis de correcteurs thermomanométriques mécaniques ou électroniques qui servent à ramener les quantités de gaz fourni aux conditions standard pour la facturation.

Et on sait bien que l'exactitude désirée de la facturation détermine la complexité d'une construction d'un tel système connu. Pour la vie pratique, il faut choisir entre une exactitude de facturation plus élevée avec un compteur sophistiqué d'un laboratoire où une facturation plus ou moins exacte avec un appareil simple.

Pour remédier à de tels inconvénients, c'est l'objet de l'invention de fournir un système de comptage d'une quantité de gaz et qui plus précisément permet de mesurer directement et sans calcul le volume que ce gaz fourni occuperait dans des conditions normales de température et pression, ce qui permet une facturation simple, comme on le ferait pour un client recevant du gaz fourni à la pression atmosphérique.

Afin d'atteindre ce but ce système de comptage selon l'invention porte sur un système de comptage tel que revendiqué dans la revendication 1.

C'est évident qu'un tel système selon l'invention remplace dans certains cas avantageusement des appareils classiques du type P.T.Z., correcteurs thermomanométriques mécaniques ou électroniques.

Selon un mode préféré le dispositif d'invention est basé sur l'emploi des éléments suivants :

- une première tuyère-Venturi fonctionnant en régime sonique (c'est-à-dire lorsque la pression aval est inférieure à environ 0,95 x la pression génératrice P amont) délivre pour un gaz de nature donné un débit-masse qui ne dépend que de cette pression génératrice P et de la masse volumique qui lui correspond dans ces conditions. Elle alimente le réservoir à remplir.

- une deuxième tuyère-Venturi, fonctionnant également en régime sonique, alimentée par la même pression génératrice P mais débitant vers la pression atmosphérique $p_o$ fournit un débit-masse proportionnel à celui de la première tuyère. Ce débit est mesuré après détente, à la pression atmosphérique sous forme de débit volumique normal, donc mesurable avec un compteur du type domestique par exemple placé à l'aval. Le dispositif possède les caractéristiques métrologiques suivantes :

- Le rapport des débits-masse en provenance des deux tuyères (et par suite le rapport des débits volumiques normaux) ne dépend que de leurs sections aux cols.

- Le régime sonique de la tuyère qui débite à la pression atmosphérique peut également être obtenu au moyen d'un simple diaphragme, le rapport des pressions amont et aval étant toujours très élevé et le désamorçage n'étant pas à craindre.

- Le volume "normal" du gaz délivré sous pression par la grande tuyère est mesuré par un compteur volumétrique branché à la sortie de la petite tuyère ou diaphragme. Le compteur fonctionnne alors dans des conditions "normales".

L'invention sera mieux comprise à la lecture de la description, se référant à la figure qui suit, de plusieurs modes de réalisation de l'invention donné à titre d'exemple non limitatif.

Le système 10 selon l'invention est schématisé suivant la figure qui montre le principe d'un circuit fournissant du gaz hydro-carburant dans un réservoir de véhicule par exemple :

Un compresseur 12 comprime du gaz arrivant d'un réservoir externe (non-illustré) par une canalisation 14 à basse pression et maintient dans un premier réservoir 16 une pression élevée, de l'ordre de 300 bars par exemple, destinée à gonfler un deuxième réservoir 18, par exemple d'une voiture, de plusieurs dizaines de litres par exemple.

Dans un tel circuit de gonflage, représenté par une première conduite 20, se trouvent montés :

une vanne d'arrêt 22 suivie d'un régulateur 24 qui maintient une pression P à l'amont d'un col préférablement d'une première tuyère-Venturi 26 travaillant préférablement en régime sonique, telle que la pression p à l'aval reste inférieure à 0,95 x P préférablement à 0,9 x P.

Ce régulateur 24 est piloté par la pression aval p selon un schéma classique connu par ailleurs.

Le débit-masse $Q_m$ vaut dans ces conditions :

$$Q_m = S \cdot f(\gamma) \cdot \sqrt{P \cdot \rho}$$

avec :

S= section au col
$\gamma$= rapport des chaleurs spécifiques du gaz
P = pression amont
$\rho$ = masse volumique amont

et la masse de gaz fournie au réservoir vaut :

$$M = S \cdot \int_0^t f(\gamma) \cdot \sqrt{P \cdot \rho}\, dt = V_o \cdot \rho_o$$

$V_o$ représentant le volume que cette masse de gaz M occuperait dans les conditions de température et de pression qui déterminent sa masse volumique "normale" $\rho_o$.

Une deuxième conduite 30 qui s'embranche à partir de la première conduite 20 en aval du régulateur 24 comporte un deuxième col 28, préférablement une deuxième tuyère de section au col s, fonctionnant également en régime sonique alimentée par la même pression génératrice régulée P débite à la pression atmosphérique $p_o$ vers un compteur de gaz 32 puis vers un troisième réservoir 34 maintenus à la pression atmosphérique.
La masse m de gaz débitée dans un même temps t vaut :

$$m = s \cdot \int f(\gamma) \cdot \sqrt{P \cdot \rho}\, dt = \upsilon_o \rho_o$$

$\nu_o$ étant le volume compté par le compteur 32 d'ou :

$$V_o = \upsilon_o \cdot \frac{S}{s}$$

quelle que soit la nature et l'état du gaz.

Le compteur 32 mesure ainsi au rapport $\frac{S}{s}$ près le volume que le gaz fourni sous pression occuperait dans les conditions normales.

Un régulateur de pression (non représenté) maintient la pression atmosphérique dans le troisième réservoir 34 et le gaz excédentaire $q_m$ qui a servi au comptage est ramené à l'amont du compresseur 12.

La première tuyère-Venturi 26 peut-être par exemple du type de celles employées pour créer des étalons de débit. Son diamètre au col S est de l'ordre de 2 à 3 mm. Dans ce cas, la deuxième tuyère-Venturi 28 est de préférence du même type mais alors avec un col s de l'ordre de 0,1 à 0,2 mm seulement.
Elle peut être réalisée par diverses techniques connues par ailleurs comme l'électroérosion ou usinage par faisceau laser et ressemble alors à une filière pour étirer des fils fins.
Enfin comme mentionné précédemment, elle (28) peut être remplacée par un simple trou du même ordre de grandeur pratiqué dans une paroi mince.

Bien que l'invention ait été expliquée selon une application dans une station-service, il est évident pour l'homme de métier d'imaginer de nombreuses applications similaires où on fournit un gaz sous haute pression et où le débit devrait être ramené aux conditions standard.

## Revendications

1. Système de comptage (10) d'une quantité d'un gaz comprimé fourni sous une haute pression d'un premier réservoir (16) par une première conduite (20) vers un deuxième réservoir (18), caractérisé en ce que ledit système de

comptage (10) comporte :

- une deuxième conduite (30) alimentée par le premier réservoir (16) et s'embranchant à partir de la première conduite (20),
- des moyens pour ramener physiquement la quantité de gaz passant dans la deuxième conduite (30) aux conditions standard de gaz fourni,
- des moyens pour mesurer (32) ladite quantité de gaz,
- une restriction de diamètre (26) interne de la première conduite (20) après la bifurcation de la deuxième conduite (30),
- une restriction de diamètre (28) interne de la deuxième conduite (30).

**2.** Système de comptage (10) selon la revendication 1, caractérisé en ce que la restriction de diamètre (26) dans la première conduite (20) se trouve dans une tuyère-venturi intégrée.

**3.** Système de comptage (10) selon une des revendications 1 ou 2, caractérisé en ce que la restriction de diamètre (28) dans la deuxième conduite (30) fait partie d'une tuyère-venturi.

**4.** Système de comptage (10) selon une des revendications 1, 2 ou 3, caractérisé en ce que la pression du gaz p après la restriction de diamètre (26) de la première conduite (20) est inférieure à 95 % de la pression P devant ladite restriction (26).

**Patentansprüche**

**1.** System zum Zählen (10) einer Quantität verdichteten Gases, das unter hohem Druck von einem ersten Reservoir (16) über eine erste Leitung (20) zu einem zweiten Reservoir (18) geliefert wird, dadurch gekennzeichnet, daß das Zählsystem (10) umfaßt:

- eine zweite, aus dem ersten Reservoir (16) gespeiste und von der ersten Leitung (20) abzweigende Leitung (30),
- Mittel für das physische Rückführen der Quantität an Gas, das in der zweiten Leitung (30) strömt, auf Normbedingungen des gelieferten Gases,
- Mittel (32) für das Messen der Gasquantität,
- eine interne Durchmessereinschnürung (26) der ersten Leitung (20) hinter der Abzweigung der zweiten Leitung (30),
- eine interne Durchmessereinschnürung (28) der zweiten Leitung (30).

**2.** Zählsystem (10) nach Anspruch 1, dadurch gekennzeichnet, daß die Durchmessereinschnürung (26) in der ersten Leitung (20) sich in einem integrierten Venturi-Rohr befindet.

**3.** Zählsystem (10) nach Anspruch 1 oder 2, dadurch gekennzeichnet, daß die Durchmessereinschnürung (28) in der zweiten Leitung (30) einen Teil eines Venturi-Rohres bildet.

**4.** Zählsystem nach einem der Ansprüche 1, 2 oder 3, dadurch gekennzeichnet, daß der Druck p des Gases nach der Durchmessereinschnürung (26) der ersten Leitung (20) kleiner ist als 95% des Drucks P vor der Einschnürung (26).

**Claims**

**1.** A metering system (10) for metering a quantity of compressed gas supplied under high pressure from a first tank (16) via a first duct (20) to a second tank (18), characterized in that said metering system (10) includes:

- a second duct (30) fed by the first tank (16) and branching from the first duct (20);
- means for physically reducing to standard conditions the quantity of gas supplied that passes into the second duct (20);
- means (32) for measuring said quantity of gas;
- a constriction (26) of inside diameter of the first duct (20) after the bifurcation of the second duct (30); and

- a constriction (28) of inside diameter of the second duct (30).

2. A metering system (10) according to claim 1, characterized in that the constriction (26) in the first duct (20) is located in an integrated Venturi nozzle.

3. A metering system (10) according to claim 1 or 2, characterized in that the constriction (28) in the second duct (30) forms a portion of a Venturi nozzle.

4. A metering system (10) according to any one of claims 1, 2, or 3, characterized in that the pressure p of the gas after the constriction (26) in the first duct (20) is less than 95% of the pressure P before said constriction (26).

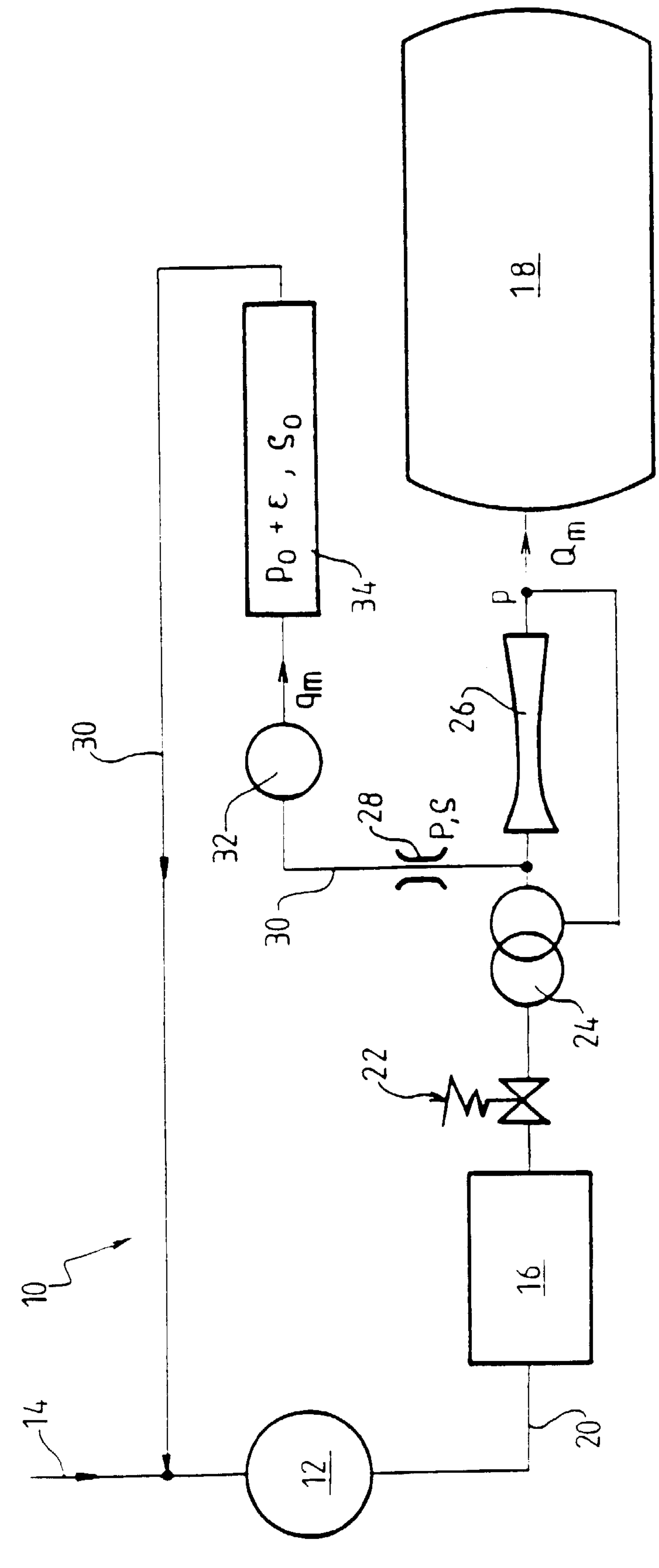
18
$P_0 + \varepsilon$ , $\rho_0$
34
30
$q_m$
$Q_m$
p
26
32
28
P,$\rho$
30
24
22
16
10
14
12
20